# EUROPEAN PATENT APPLICATION

(11) **EP 1 333 647 A2**
(43) Date of publication of application: **06.08.2003**
(21) Application number: 02257795.1
(22) Date of filing: 11.11.2002
(51) Int. Cl.: H04L 29/12

(54) **Domain name management method and apparatus therefor**

(30) Priority: 29.01.2002 KR 2002005216
(71) Applicant: SAMSUNG ELECTRONICS CO., LTD., Suwon-City, Kyungki-do (KR)
(72) Inventor: Lee, Hak-goo, Suwon-si, Gyeonggi-do (KR)
(74) Representative: Brandon, Paul Laurence

(57) **Abstract**

A method of managing domain names for dynamically or relatively statically allocated IP addresses over a network based on a transmission control protocol/Internet protocol (TCP/IP) is provided. Here, being relatively static means that an identical IP address is consecutively allocated at least twice by a dynamic host configuration protocol (DHCP) routine. According to this method, the DHCP server and the DHCP client can transmit an information pair of an IP address and a hardware identification to the DNS server, so that a domain name service with respect to a dynamically or relatively statically allocated IP address can be provided.

## Description

The present invention relates to Internet protocol (IP) address allocation methods over a network based on a transmission control protocol/Internet protocol (TCP/IP), and more particularly, but without limitation, to methods of managing domain names for dynamically or relatively statically allocated IP addresses.

Networks are constructed in a physical hardware, but require a series of regulations for controlling and regulating networks. The series of regulations is called a protocol. Protocols are core parts of a network, which are continuously developed and improved.

A transmission control protocol/Internet protocol (TCP/IP) is one of the Inter-networking techniques. A TCP/IP is originated from a TCP and an IP, which are two core protocols to construct a TCP/IP.

An IP address is a unique number to distinguish individual computers connected to the Internet. The IP address is composed of 32 bits (a 32-digit binary number) but expressed in a decimal number by dividing the 32 bits into 4 octets (where 1 octet is an 8-digit binary number). Each of the 4 octets is divided by a dot, and has a value in the range of 0-225. For example, an IP address is 204.252.145.2.

An IP address is divided into two parts, that is, a network ID and a host ID. A subnet mask is used to mask a predetermined portion of the IP address and distinguish the network ID from the host ID during the operation of a TCP/IP. Using the subnet mask, a TCP/IP host can distinguish whether a destination exists in a local network or in a remote network.

Since such an IP address is not easily used or remembered by people, the Internet provides another address called a domain name. Hence, each host has an IP address and a domain name. For example, the host of hitel, which is one of the IP providers, has an IP address that is 204.252.145.2 and a domain name that is hitel.net.

In a TCP/IP Internet, a conversion of an IP address into a domain name can be achieved by two methods, that is, a method based on a file called hosts and a method based on a domain name system (DNS).

In a small-scale TCP/IP Internet, the conversion between a domain name and its Internet address is usually performed using a file, hosts, directly in an appropriate host.

Most TCP/IP softwares support the file, hosts, to maintain local database regarding the corresponding relationship between a domain name and its Internet address. The file, hosts, must include the corresponding relationship between the domain name of a host a user tries to connect to and its Internet address.

In a large-scale Internet, it is greatly difficult for each host to maintain the local "hosts" file including a name-address corresponding relationship. A domain name service (DNS) is a hierarchical naming service in which the corresponding relationship between a domain name and its Internet address is not maintained in each host but in several local places.

A DNS maps an IP address to a fully qualified domain name (FQDN; e.g., hitel.net) on the Internet.

A dynamic host configuration protocol (DHCP) is not a static protocol for setting IP addresses one by one but a dynamic protocol in which a DHCP server automatically sets the IP address and subnet mask held by itself, the IP address of the DNS server, the IP address of a WINS server, and a default gate way address.

However, IP addresses dynamically allocated by a conventional DHCP server cannot have their domain names. The IP address allocation technique using the DHCP is anticipated to become an essential auto-configuration element to be used as a killer application in an IPv6 and a mobile IP to be actively utilized.

It is an aim of preferred embodiments of the present invention to provide an improved domain name managing method capable of managing domain names for dynamically allocated IP addresses as well as statically allocated IP addresses.

Another aim of preferred embodiments of the present invention is to provide a domain name managing apparatus appropriate for the above method.

In a first aspect, the present invention provides a method of managing domain names over a network including a dynamic host configuration protocol (DHCP) server, a DHCP client, and a domain name service (DNS) server, the method comprising the DHCP server maintaining an information pair of an IP address and a hardware identification and broadcasting renewed contents to the DNS server if there is a renewal of the information pair; the DHCP client maintaining an information pair of an IP address and a hardware identification and broadcasting renewed contents to the DNS server if there is a renewal of the information pair; and the DNS server receive the IP address-hardware identification information pairs from the DHCP server and the DHCP client, adding the IP address-hardware identification information pair received from the DHCP server to database for storing information pairs of an IP address and a hardware identification, and adding the IP address-hardware identification information pair received from the DHCP client to the database or renewing the database using the IP address-hardware identification information pair received from the DHCP client.

In a second aspect, the present invention provides an apparatus for managing domain names over a network including a DHCP server, a DHCP client, and a DNS server, the apparatus comprising: a DHCP server apparatus, a DHCP client apparatus, and a DNS server apparatus; the DHCP server apparatus including the DHCP server for dynamically allocating an IP address at the request of the DHCP client, a translator A for relatively statically allocating an IP address and storing an information pair of the relatively statically allocated IP address and a hardware identification, and a transmitter for transmitting the information pair stored in the translator A to a DNS server apparatus; a DHCP client apparatus including the DHCP client, which stores an information pair of an allocated IP address and a hardware identification and uses a dynamically or relatively statically allocated IP address; and a transmitter for transmitting an information pair of a dynamically allocated IP address and a hardware identification to the DNS server apparatus; the DNS server apparatus including the DNS server for maintaining database for storing information pairs of an IP address and a hardware identification and responding to a DNS inquiry, a receiver for receiving information pairs of an IP address and a hardware identification from the DHCP server apparatus and the DHCP client apparatus, and a translator C for transmitting the IP address-hardware identification information pairs received via the receiver to the DNS server.

In a third aspect according to the present invention, there is provided a domain name managing method by a DNS server for maintaining its database having information pairs of an IP address and a hardware identification, the method comprising:receiving information pairs of an IP address and a hardware identification from a DHCP server and a DHCP client; and adding the information pair of an IP address and a hardware identification received from the DHCP server to the database, and adding the information pair of an IP address and a hardware identification received from the DHCP client to the database or renewing the database using the IP address-hardware identification information pair received from the DHCP client.

Further features of the present invention are set out in the appended claims.

The present invention will become more apparent by describing in detail preferred embodiments thereof, by way of example only, with reference to the attached drawings in which:
Figure 1 is a schematic view of a communication process between DPCH servers and clients;
Figure 2 is a block diagram of the hierarchical structure of a TCP/IP protocol;
Figure 3 is a block diagram of the structures of a conventional DHCP server, a DHCP client, and a DNS server;
Figure 4 is a flowchart illustrating a DNS managing method in a network including a conventional DHCP;
Figure 5 is a flowchart illustrating a domain name managing method according to the present invention;
Figure 6 is a block diagram of the structure of a DHCP server apparatus appropriate for a domain name managing method according to the present invention;
Figure 7 is a block diagram of the structure of a DHCP client apparatus appropriate for a domain name managing method according to the present invention; and
Figure 8 is a block diagram of the structure of a DNS client apparatus appropriate for a domain name managing method according to the present invention.

A dynamic host configuration protocol (DHCP) is mainly used to facilitate management by automatically configuring the dynamic IP addresses of clients. A DHCP server lends the IP addresses possessed by itself to DHCP clients.

The DHCP is prescribed in a Request For Comment (RFC) 1533, an RFC 1534, an RFC 1541, and an RFC 1542. DHCP is an extended version of a protocol for allocating an IP address in order to boot a diskless client called a BOOTP (RFC 951).

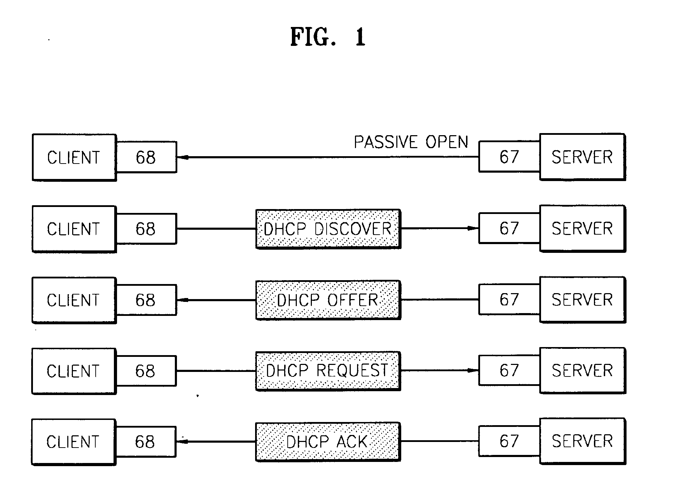

The communication between a DHCP server and a DHCP client is performed in a broadcasting manner, as shown in Figure 1.

Firstly, a DHCP client discovers a DHCP server.

When the DHCP client is booted, it sends a 'DHCP DISCOVER' packet with a content of 'send IP address' to the DHCP server in order to receive an IP address. The contents of the packet are as follows; a sender IP address that is 0.0.0.0 because the DHCP client has not yet had an address; a recipient IP address that is 255.255.255.255 because communications are performed through broadcasting; and a hardware address, which is a media access control (MAC) address of the packet, here, a unique 48-bit number granted by a manufacturer to a network interface card (NIC) made by itself.

Secondly, the DHCP server offers IP addresses to the DHCP client.

In response to the request of the DHCP client, the DHCP server sends a DHCP offer packet to the DHCP client. The packets contains the following elements: a sender IP address, which is the IP address of the DHCP server; a recipient IP address, which is set to be 255.255.255.255 because the recipient has not yet been allocated any IP address; offered IP addresses capable of being lent to the DHCP client; a client hardware address, which is a MAC address sent by the DHCP client; a subnet mask, which is the subnet mask of a rentable IP address; a rent period, which is the rent period for the lent IP address; and a server identifier, which is the IP address of the DHCP server.

When there is no response to the request of the DHCP client from the DHCP server, the DHCP client makes another three requests for an IP address for 0-1000 milliseconds each after 9 seconds, after 13 seconds, and after 16 seconds, respectively. If the DHCP server does not still respond to the total of 4 requests, the DHCP client gives up tentatively and, later on, calls the DHCP server at intervals of 5 minutes.

Thirdly, the DHCP client selects one IP address of the offered ones and requests the DHCP server to use the selected IP address.

To be more specific, since all of the DHCP servers respond to the request of the DHCP client, the DHCP client can select one IP address from the offered IP addresses. The IP address selection means a response of the DHCP client to the offer of a DHCP server. Hence, the DHCP client needs to inform the other DHCP clients of the IP address selection by sending a 'DHCP REQUEST' packet to them. The 'DHCP REQUEST' packet has the following contents: a sender IP address of 0.0.0.0, which means that it takes quite long to fix the IP address for the DHCP client; the recipient IP address 255.255.255.255, of the other DHCP servers to which the fact that an IP address has been selected is to be broadcasted; a hardware address, which is the MAC address of the DHCP client; a requested IP address, which is an IP address selected by the DHCP client; and a server identifier, which is the IP address of the DHCP server that offered the selected IP address.

Fourthly, the DHCP server acknowledges the selected IP address.

To be more specific, when the DHCP server receives the 'DHCP REQUEST' packet, it sends a 'DHCP ACK' packet to the DHCP client. Of course, the DHCP server sending the 'DHCP ACK' packet is only one DHCP server that has offered the selected IP address. The other DHCP servers recognize that their IP address offers have not been selected, and collect and store the IP address offers in order to lend them to the other DHCP clients. The 'DHCP ACK' packet includes the following contents: a sender IP address, which is the IP address of a selected DHCP server; a recipient IP address that is set to be 255.255.255.255 because the selected IP address is not valid until the DHCP client receives the 'DHCP ACK' packet; an offered IP addresses, which is the selected IP address; a client hardware address, which is the MAC address of the DHCP client; a subnet mask, which is the subnet mask of the selected IP address; a renting period, which is basically 3 hours, which can be set differently); a server identifier, which is the address of the DHCP server; and DHCP additional options, which are options added by a DHCP server.

Thereafter, DHCP clients participate in a network using the borrowed IP address, and try to renew the borrowed IP address when the renting period is expired. Through this renewal, the IP address can be continuously used. The first renewal attempt occurs when the renting period passes 50%, and the second renewal attempt occurs when the renting period passes 87.5%. "IP Lease Renewal" is a mechanism for extending the renting period of the IP address by renewing the IP address before the renting period of the IP address is expired. After a half of the renting period has passed, the DHCP client re-sends a 'DHCP REQUEST' packet to the DHCP server that rented the IP address. Here, since the DHCP client has its own IP and knows which server has rent the IP address, an accurate IP address is written to the packet.

The DHCP server renews the renting period of the selected IP address. If there are additional options for a changed DHCP, the DHCP server sends a 'DHCP ACK' packet together with the additional options.

If the DHCP server having rented an IP address cannot send the 'DHCP ACK' packet at the point in time when the renting period has passed 50%, the DHCP client broadcasts a 'DHCP REQUEST' packet at the point in time when 7/8 of the renting period has passed. If the DHCP server having rented an IP address operates normally, a 'DHCPACK' pack containing a message 'renewal' is returned. Otherwise, the DHCP client receives a 'DHCP ACK' representing that another DHCP server allocates a new IP address, and is initialized with the new IP address and setting values.

When the DHCP client is initialized, it broadcasts a 'DHCP REQUEST' packet representing to use the same IP address from the same DHCP server. Even though there is no 'DHCPACK' response to the request, the DHCP client continuously uses the same IP address if the rending period set at first has not yet been expired. If the renting period is expired and, besides, any IP address is not received from any DHCP server, the TCP/IP is not initialized. Consequently, all applications using a network cannot help failing. Here, a port 68, called bootpc, is provided to a DHCP/BOOTP protocol server.

DNS servers are computers that convert a domain name into an IP address expressed in figures. The DNS servers are located in several places on the Internet and process inquiries about the domain name. That is, the DNS servers serve as a mediator to help a netizen who only knows a domain name (e.g., zonesoft.co.kr) to access an actual address, that is, an IP address (e.g., 211.169.248.107).

In fact, the DNS server stores a "Domain:IP" pair, like "zonefoft.co.kr: 211.169.248.107", in a file, and sends 211.169.248.107 in response to an inquiry about zonesoft.co.kr. That is, since the file contents are statically configured, general netizens cannot establish an independent web server and consequently cannot receive an Internet service based on a domain name. This is because any DNS server around the world does not memorize its own 'domain:IP' pair.

As mentioned earlier, the DNS server can only memorize statically fixed IPs. However, recent cheap ultra-speed Internet services widely used supply floating IP addresses, which change at any time, to subscribers' computers. The subscriber using the floating IP address cannot be provided with an Internet service, such as a web server for the following several reasons. A first reason is that a computer (e.g., a computer that performs a web server) cannot be found by using the domain name of the subscriber because a DNS server does not memorize the subscriber's 'domain:IP' pair. A second reason is that a frequent change of an IP address makes it difficult for a computer on the outside to access an appropriate computer by using only an IP address, and that it is impossible for the general public to construct a web server.

Accordingly, a web hosting service is widely utilized of late. Web hosting is a method in which a user receives a small space from the computer of a service provider (e.g., netian.com) using a leased line and operates his or her own homepage. Such a web hosting is not inconvenient for the purpose of general uses, but accompanies a lot of restrictions because the computer that the user uses is not his or her computer. For example, there are a lot of limits in the use of a common gateway interface (CGI) and a database (DB), and the user cannot install any new program. The user only has an account granted by the service provider but is not a super user.

The most typical method for a user to be given a fixed IP is using a leased line. Besides, the use of leased lines is the most stable and secure method in large-scale systems. However, a lot of money is required to install and operate a leased line. Although the lease line is stable, it is also true that the speed is not a satisfactory level as compared to the costs.

This requires an improved method by which a user can be provided with a DNS while using a floating IP.

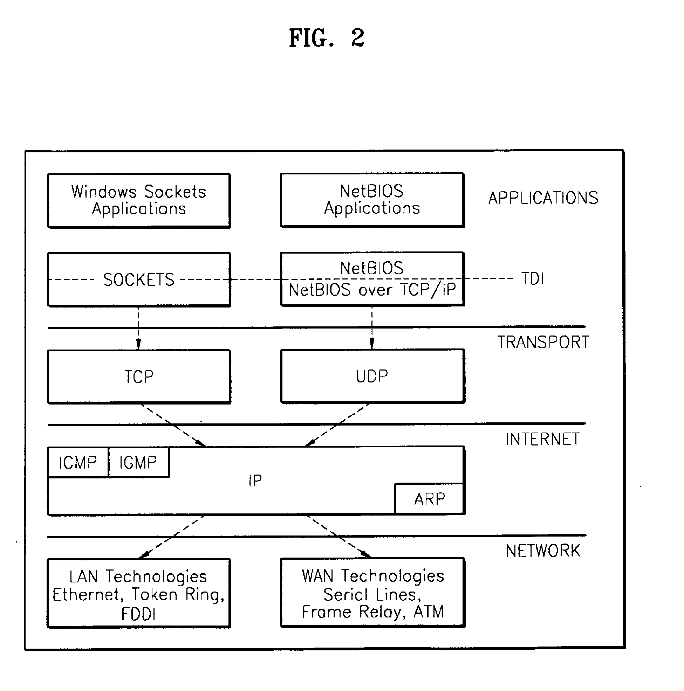

Figure 2 shows the hierarchical structure of a transmission control protocol/Internet protocol (TCP/IP). A TCP/IP is a standard protocol designed for a wide area network (WAN). The TCP/IP is mapped to four hierarchical models: a network interface, an Internet, a transport, and an application. The most basic model is a network interface layer, which sends data to or receives it from a cable for transmitting data in an actual network.

The second basic model is an Internet layer, which manages addresses, capsules data, and performs routing. The Internet layer has 3 protocols. Firstly, an IP manages addresses and routs packets over hosts and a network. Secondly, an address resolution protocol (ARP) is used to obtain hardware addresses (e.g., MAC addresses) of hosts located on the same network. Thirdly, an Internet control message protocol (ICMP) is used to process error messages related to packet transmission.

The third basic model is a transport layer, which provides communications between hosts. The transport layer includes two protocols, that is, a TCP and a user datagram protocol (UDP). The TCP, which is also called a connection oriented protocol, is generally used to transmit a large amount of data or used when a request for an acknowledgement message that data has been received is needed. The UDP, which is also called a connectionless protocol, does not guarantee an accurate transmission of packets. An application generally uses the UDP to transmit a small amount of data. Since the UDP does not guarantee accurate transmission, its upper layer, that is, an application layer, takes the responsibility for transmission failure.

The top-level model is the application layer, which helps an application to access a network. The TCP/IP by Microsoft Co., Ltd. provides Windows Sockets and a NetBIOS interface located between the application layer and the transport layer. The Window Sockets provide a standard application program interface (API) to a Window environment, between the protocols of many transmission layers and different address systems. The NetBIOS provides a standard Interface that can use protocols, such as TCP/IP, NetBEUI, and the like.

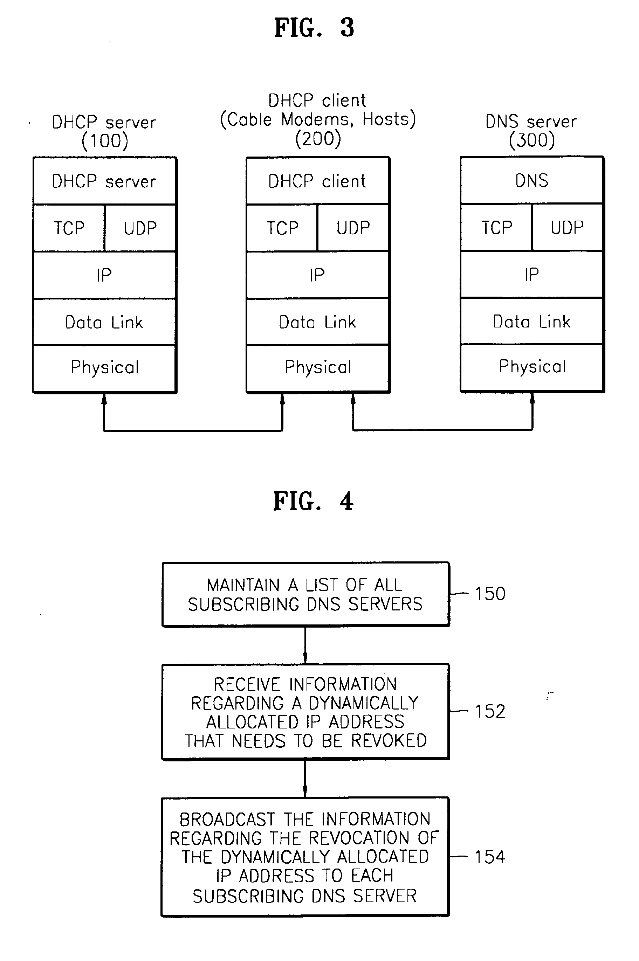

Figure 3 is a block diagram of the structures of a conventional DHCP server, a DHCP client, and a DNS server. Figure 3 shows a DHCP server 100, a DHCP client 200, and a DNS server 300. The DHCP server 100, the DHCP client 200, and the DNS server 300 are networks based on TCP/IP or UDP, and each have a hierarchical structure as shown in Figure 2.

A client-server relationship is established between an application program to require DNS-based name conversion and a host on the Internet that provide name conversion services. A DNS client software is called a resolver, and a DHCP server software is called a name serve.

When a domain name system is used, all of the hosts on the Internet perform the DNS client software called a resolver.

Figure 4 is a flowchart illustrating a DNS managing method over a network including a conventional DHCP. In step 150, a broker maintains a list of all DHCP servers and DNS servers.

In step 152, the broker receives information regarding a dynamically allocated IP address to be revoked. The information is received from a DHCP server when a user is disconnected from a service.

In step 154, the broker broadcasts information regarding the revocation of the dynamically allocated IP address to each subscribing DHCP server and each subscribing DNS server. The DHCP servers and the DNS servers update their database in order to reflect this change.

The DNS servers delete appropriate records from their database, and the DHCP servers delete records and return the dynamically allocated IP address to an IP address pool.

Broadcasting of dynamically allocated IP addresses is performed by the broker. The broker transmits the information regarding the dynamically allocated IP address to the DNS servers and the DHCP servers. The broker is also used to renew the DNS servers in regard to a newly allocated dynamic IP address. The broker is implemented in software or hardware.

However, the method of Figure 4 is only used under the assumption that there is a lack of IP addresses. Depending on circumstances, a lot of IP addresses are left over, or IP addresses are scarce. There are no countermeasures for the above circumstances.

In the method of Figure 4, if the DHCP servers and the broker try to update the information on a great number of subscribers that use the DNS every time a change happens, the two apparatus bear heavy loads. This greatly affects the stability of a network.

In addition, in the method of Figure 4, a DHCP server and a DNS server must subscribe to the broker in order to use the broker, and the broker receives updated contents from the subscribed DHCP server and the subscribed DNS server and transmits them to the other DHCP servers and the other DNS servers. This requires either an extra apparatus called a broker or a software application.

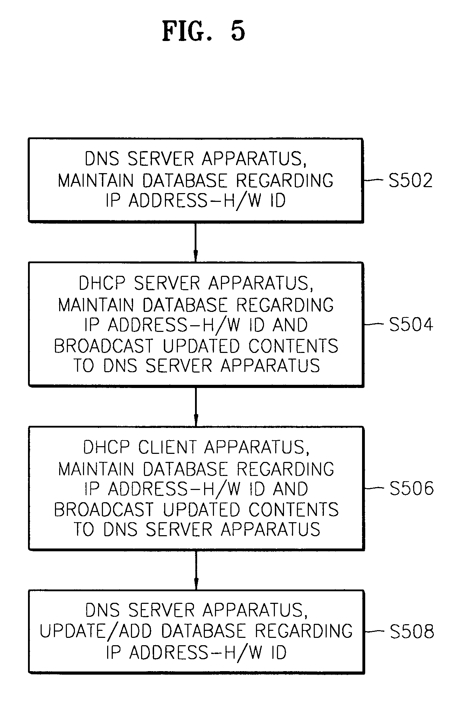

Figure 5 is a flowchart illustrating a domain name managing method according to the present invention. First, in step S502, a DNS server apparatus maintains a database in which an information pair of IP address-hardware identification (H/W ID) is stored as a mapping entry. Here, the IP address-H/W ID information pair includes all IP addresses that are dynamically or relatively statically allocated. Here, the DNS server apparatus includes a conventional DNS server and also includes a translator C and a receiver.

In step S504, a DHCP server apparatus maintains a database in which the IP address-H/W ID information pair is stored as a mapping entry, and broadcasts updated contents to the DNS server apparatus if updating happens. In particular, the DHCP server apparatus broadcasts an information pair of dynamically allocated IP address-H/W ID to the DNS server apparatus. The DHCP server apparatus includes a conventional DHCP server and also includes a translator A and a receiver.

In step S506, a DHCP client apparatus maintains a database in which an information pair of IP address-H/W ID is stored as a mapping entry, and broadcasts updated contents to the DNS server apparatus if updating happens. In particular, the DHCP client apparatus broadcasts an information pair of dynamically allocated IP address-H/W ID to the DNS server apparatus. Here, the DHCP client apparatus can be an apparatus that requires an IP address, such as, a cable modem, a web hosting server, or the like.

In step S508, the DNS server receives the IP address-H/W ID information pairs from the DHCP server apparatus and the DHCP client apparatus. When the DNS server receives an IP address-H/W ID information pair from the DHCP server apparatus, it adds the IP address-H/W ID information pair to the database of itself. When the DNS server receives an IP address-H/W ID information pair from the DHCP client apparatus, it adds a mapping entry composed of the IP address-H/W ID information pair of the DHCP client apparatus to the database of itself or updates the mapping entry of the database using the IP address-H/W ID information pair. The DHCP client apparatus includes a conventional DHCP client and also includes a transmitter.

In the domain name managing method of Figure 5, the DHCP server apparatus and the DHCP client apparatus broadcast updated contents to the DNS server apparatus. Accordingly, the DNS server can provide its service in consideration of an information pair of dynamically or relatively statically allocated IP address-H/W ID.

In addition, since the DHCP server apparatus and the DHCP client apparatus transmit an information pair of updated IP address-H/W ID to the DNS server apparatus through the Internet, an extra apparatus called a broker is not needed in contrast with the method of Figure 4.

The method of Figure 5 can be quite effectively used in an IPv6 and MOBILE IP, each of which uses a 128-bit address system. Particularly, in case that the method of Figure 5 is applied to the MOBILE IP, even when a mobile body having a domain name moves from a network to another network and is given an inappropriate IP address by auto-configuration, this network change can be immediately reflected in the DNS server. Thus, a DNS service can be effectively provided.

In the domain name management method according to the present invention, the DHCP server apparatus and the DHCP client apparatus maintain a database having an information pair of updated IP address-H/W ID. If there is a change in the database, the DHCP server apparatus and the DHCP client apparatus can change the database by adding a simple program (i.e., a translator to be described later) for transmitting changed contents to the DNS server.

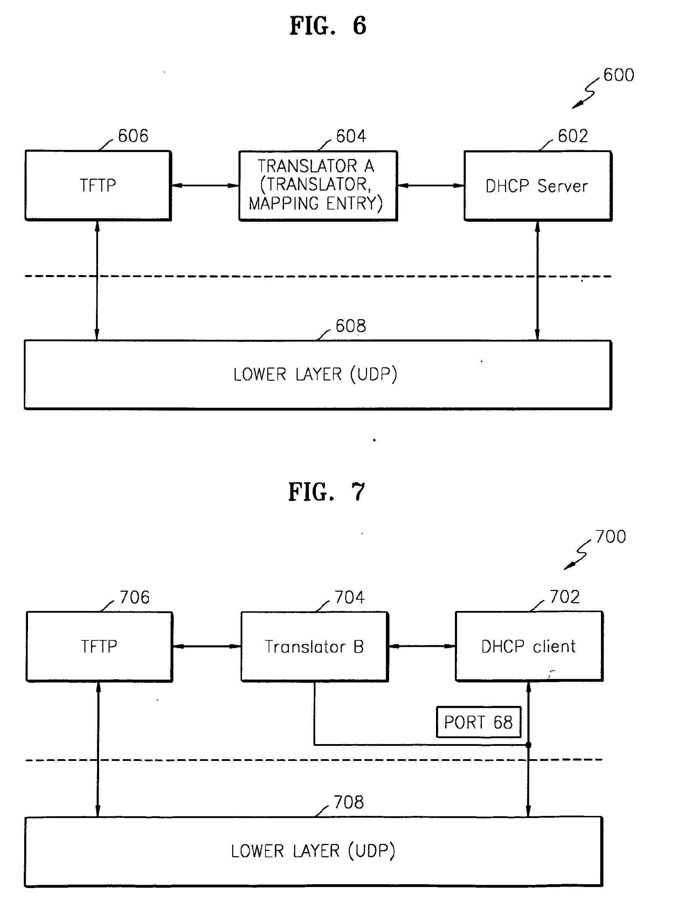

Figure 6 is a block diagram of the structure of a DHCP server apparatus 600 appropriate for a domain name managing method according to the present invention. Referring to Figure 6, the DHCP server apparatus 600 includes a DHCP server 602, a translator A 604, a trivial file transfer protocol (TFTP) 606, and a UDP 608.

The DHCP server 602 includes a BOOTP 602a and an address POOL 602b. The BOOTP 602a performs static address allocation, and the address POOL 602b is an idle IP address depository for dynamically allocating addresses.

The translator A 604 operates when IP addresses used to be dynamically allocated are tried to be relatively statically allocated since idle IP addresses are too much. The translator A 604 includes mapping database for storing an information pair of allocated IP address-H/W ID.

The translator A 604 uses a TFTP 606 in order to transmit address allocation information to the DNS server apparatus. The TFTP 606 corresponds to a transmitter described in the Summary of the Invention in the specification. However, one skilled in the art can recognize that apparatus other than a transmitter can be used as the TFTP 606.

The TFTP is a network application that is simpler than an FTP but has an inferior function to the FTP. The TFTP requires a user authentication process, and is used in a place that does not require a directory. The TFTP uses a UDP 608 instead of a TCP, and has been officially described in an RFC 1350.

Figure 7 is a block diagram of the structure of a DHCP client apparatus 700 appropriate for a domain name managing method according to the present invention. Referring to Figure 7, the DHCP client apparatus 700 includes a DHCP client 702, a translator B 704, a TFTP 706, and an UDP 708.

The DHCP client 702 uses a dynamically or relatively statically allocated IP address.

The translator B 704 includes database for storing an information pair of allocated IP address-H/W ID, and monitors a DHCP port called port 68. When an IP address is relatively statically allocated, the translator B 704 enters into an inactive state.

When an IP address is dynamically allocated, the translator B 704 is transferred from the inactive state to an active state. An information pair of dynamically allocated IP address-H/W ID is transmitted via the TFTP 706 and the UDP 708 to a DNS server apparatus.

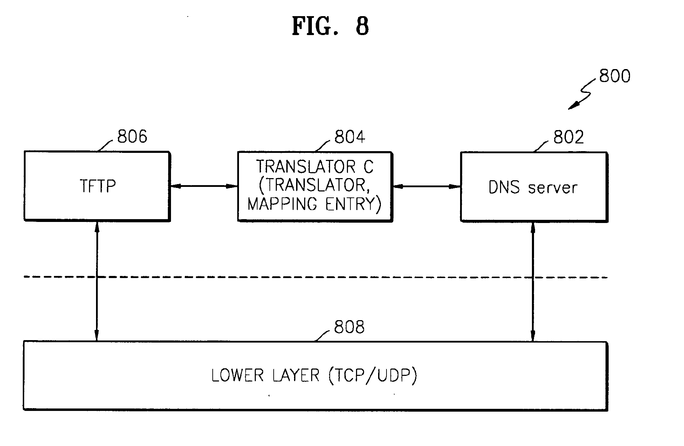

Figure 8 is a block diagram of the structure of a DNS server apparatus 800 appropriate for a domain name managing method according to the present invention. Referring to Figure 8, the DNS server apparatus 800 includes a DNS server 802, a translator C 804, a TFTP 806, and a TCP/UDP 808.

The DNS server 802 has a mapping entry regarding a mapping between domain names and IP addresses, and responds to a DNS inquiry.

When an IP address-H/W ID information pair is received from a DHCP server, the translator C 804 investigates a H/W ID stored in the database and transmits an allocated IP address associated with the investigated H/W ID to the DNS server 802.

When an IP address-H/W ID information pair is received from a DHCP client apparatus, the translator C 804 investigates a H/W ID stored in the database and transmits a dynamically allocated IP address associated with the investigated H/W ID to the DNS server 802.

The TFTP 806 corresponds to a receiver described in the Summary of the Invention in the specification. However, one skilled in the art can recognize that apparatuses other than the TFTP can be used as the receiver.

Hereinafter, the operations of the apparatus of Figures 6 through 8 will be described in different cases.

### [Case A that a DHCP server can dynamically allocate an IP address]

Case A corresponds to a case that a DHCP server cannot allocate a relatively static IP address for a certain reason when the user of a DHCP client apparatus requires a dynamic IP address using DHCP.

Firstly, the translator A 602 of the DHCP server apparatus 600 enters into an inactive state.

Secondly, the translator B 702 of the DHCP client apparatus 700 enters into an active state.

If the user of the DHCP client apparatus 700 needs to have a domain name, he or she inquires of the DHCP server 602 about whether a relatively static IP address can be used, using the TFTP 706. If an allocated IP address continuously changes dynamically, the user renders the translator B 704 in an active state and repeats the following processes.

First of all, the continuously changing IP address is monitored through port 68. Next, since entering of a 'DHCP ACK' packet means that an IP address is allocated to the DHCP client 702 for a certain period of time, the translator B 704 extracts the allocated IP address from the packet. Thereafter, if the allocated IP address is different from a previously allocated IP address, the translator B 704 transmits an information pair of the MAC address of appropriate hardware and the newly allocated IP address to the TFTP 706. Then, the TFTP 706 broadcasts the information pair to the DNS server apparatuses 800 connected to an appropriate network.

Thirdly, the translator C 804 of the DNS server apparatus 800 receives the information pair from the DHCP client apparatus 700 via the TFTP 806 and adds the information pair to the database or corrects the database using the information pair.

That is, if the translator C 804 checks that a H/W ID exists in the database, it renews an IP address corresponding to the H/W ID. If the translator C 804 checks that no H/W IDs exist in the database, it adds the received information pair to the database. The renewed and added information pair is automatically transmitted to the DNS server 802.

### [Case B that the DHCP server 602 can relatively statically allocate an IP address]

Case B corresponds to a case that the DHCP server 602 can allocate a relatively static IP address when the user of the DHCP client apparatus 700 requires a relatively static IP address using DHCP.

Firstly, the translator A 604 of the DHCP server apparatus 600 enters into an active state. The translator A 604 manages database having the information pair of relatively statically allocated IP address-H/W ID stored in the DHCP client apparatus 700.

Every time an IP address is relatively statically allocated, the information pair of relatively statically allocated IP address-H/W ID is added to the database of the translator A 604.

When a 'DHCP REQUEST' packet enters the DHCP server 602, the DHCP server 602 searches the mapping entry for an allocated IP address and re-allocates the allocated IP address.

Only the information pair added in the database is broadcasted to the TFTP 806 of the DNS server apparatus 800 via the TFTP 604.

Secondly, the translator B 704 of the DHCP client apparatus 700 enters into an inactive state. To be more specific, after an IP address capable of being relatively statically used is sent to the DHCP server apparatus 600 together with a H/D ID, the translator B 704 enter into an inactive state when it monitors that a relatively static IP address is continuously allocated.

Thirdly, the DNS server apparatus 800 receives the information on the DHCP client apparatus 700 having a domain name via the TFTP 806. The translator C 804 adds the received information to the database.

Only when the translator C 804 checks that no information exists in the database, it adds the received information to the database. The added information pair is automatically transmitted to the DNS server 802.

### [Case C that a situation changes]

That is, case C corresponds to a case when an IP address that used to be relatively statically allocated is to be dynamically allocated or the opposite case.

Firstly, the translator A 604 of the DHCP server apparatus 600 enters into an active state, and performs the operation corresponding to case A or case B according to whether IP addresses are sufficient or deficient.

Secondly, the translator B 704 of the DHCP client apparatus 700 enters into an inactive state, and performs the operation corresponding to case A or case B according to whether IP addresses are sufficient or deficient.

Thirdly, the DNS server 802 receives the information regarding the DHCP client apparatus 700 having a domain name, for example, a cable modem or a web host, via the TFTP 806. The translator C 804 adds the received information to its mapping entry or renews the mapping entry using the received information.

The DNS server 802 performs the operation corresponding to case A or case B according to whether IP addresses are sufficient or deficient.

In such a domain name managing method according to the present invention as described above, a DHCP server and a DHCP client can transmit an information pair of IP address-H/W ID to a DNS server, so that a domain name service with respect to a dynamically or relatively statically allocated IP address can be provided.

The DHCP server and the DHCP client also transmits a renewed information pair of IP address-H/W ID to the DNS server through the Internet, so that an extra broker as required in a conventional method is not needed.

In addition, an excess load caused by loading all DNS operations on a server and a broker in a conventional domain name managing method is divided and loaded on a server side and a client side, such that each of the server side and the client side bears a less burden. The domain name managing method according to preferred embodiments of the present invention is adaptively performed according to situations whether IP addresses are sufficient or deficient, thus providing a more optimized network environment.

Furthermore, the domain name managing method according to preferred embodiments of the present invention can be quite effectively used in an IPv6 and a MOBILE IP, each of which uses a 128-bit address system. Particularly, in case that preferred embodiments of the present invention are applied to the MOBILE IP, even when a mobile body having a domain name moves from a network to another network and is given an inappropriate IP address, this address change can be immediately reflected in the DNS server. Thus, a DNS service can be effectively provided.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of managing domain names over a network including a dynamic host configuration protocol (DHCP) server, a DHCP client, and a domain name service (DNS) server, the method comprising:
the DHCP server maintaining (S502) an information pair of an IP address and a hardware identification and broadcasting renewed contents to the DNS server if there is a renewal of the information pair;
the DHCP client maintaining (S504, S506) an information pair of an IP address and a hardware identification and broadcasting renewed contents to the DNS server if there is a renewal of the information pair; and
the DNS server receiving (S508) the IP address-hardware identification information pairs from the DHCP server and the DHCP client, adding the IP address-hardware identification information pair received from the DHCP server to database for storing information pairs of an IP address and a hardware identification, and adding the IP address-hardware identification information pair received from the DHCP client to the database or renewing the database using the IP address-hardware identification information pair received from the DHCP client.

2. The method of claim 1, wherein the DHCP server and the DHCP client broadcast a renewed information pair of IP address-hardware identification to the DNS server via a trivial file transfer protocol (TFTP).

3. An apparatus for managing domain names over a network including a DHCP server, a DHCP client, and a DNS server, the apparatus comprising:
a DHCP server apparatus (600) including the DHCP server (602) for dynamically allocating an IP address at the request of the DHCP client, a translator A (604) for relatively statically allocating an IP address and storing an information pair of the relatively statically allocated IP address and a hardware identification, and a transmitter for transmitting the information pair stored in the translator A to a DNS server apparatus (800) ;
a DHCP client apparatus (700) including the DHCP client (702), which stores an information pair of an allocated IP address and a hardware identification and uses a dynamically or relatively statically allocated IP address, and a transmitter (704) for transmitting an information pair of a dynamically allocated IP address and a hardware identification to the DNS server (800) apparatus; and
the DNS server apparatus (800) including the DNS server (802) for maintaining database for storing information pairs of an IP address and a hardware identification and responding to a DNS inquiry, a receiver for receiving information pairs of an IP address and a hardware identification from the DHCP server apparatus and the DHCP client apparatus, and a translator C (804) for transmitting the IP address-hardware identification information pairs received via the receiver to the DNS server.

4. The apparatus of claim 3, wherein the apparatus further comprises a translator B (702), which monitors a DHCP port called port 68 and enters into an inactive state if an IP address is relatively statically allocated or enters into an active state if an IP address is dynamically allocated.

5. The apparatus of claim 3 or claim 4, wherein, when the translator C (804) receives the information pair of a relatively statically allocated IP address and a hardware identification from the DHCP server apparatus (600), the translator C (804) checks the hardware identification stored in the database and allocates the relatively statically allocated IP address to the DNS server (802), or when the translator C receives the information pair of a dynamically allocated IP address and a hardware identification from the DHCP client apparatus (700), the translator C (804) checks the hardware identification stored in the database and allocates the dynamically allocated IP address to the DNS server (802).

6. A domain name managing method by a DNS server for maintaining its database having information pairs of an IP address and a hardware identification, the method comprising:
receiving (S502, S504) information pairs of an IP address and a hardware identification from a DHCP server and a DHCP client; and
adding (S508) the information pair of an IP address and a hardware identification received from the DHCP server to the database, and adding the information pair of an IP address and a hardware identification received from the DHCP client to the database or renewing the database using the IP address-hardware identification information pair received from the DHCP client.

7. A method of managing domain names over a network including a DHCP server, a DHCP client, and a DNS server, the method comprising:
maintaining an information pair of an IP address and a hardware identification; and
broadcasting changed contents to the DNS server if there is a change in the IP address-hardware identification information pair.
